# EUROPEAN PATENT APPLICATION

(11) **EP 4 513 953 A1**
(43) Date of publication of application: **26.02.2025**
(21) Application number: 23799193.0
(22) Date of filing: 24.04.2023
(51) Int. Cl.: H04W 28/02

(54) **COMMUNICATION METHOD AND APPARATUS**

(30) Priority: 05.05.2022 CN 202210482339
(71) Applicant: Huawei Technologies Co., Ltd., Shenzhen, Guangdong 518129 (CN)
(72) Inventor: LI, Yongcui, Shenzhen, Guangdong 518129 (CN); NI, Hui, Shenzhen, Guangdong 518129 (CN)
(74) Representative: Gill Jennings & Every LLP
(86) International application number: PCT/CN2023/090196
(87) International publication number: WO 2023/213206

(57) **Abstract**

Embodiments of this application provide a communication method and a communication apparatus. The method includes: A network device sends first information to a terminal device, where the first information indicates at least one second network, the second network is a network in which local traffic routing is allowed by a first public network, the network device is a device of the first public network, and the first network is a home network of the terminal device; the terminal device performs network switching; and the terminal device determines, based on the first information and networks before and after the switching, an application server having an optimal path. In embodiments of this application, the application server is determined based on whether the first information includes the network after the switching, thereby improving communication quality after the network switching and reducing communication latency.

## Description

This application claims priority to Chinese Patent Application No. 202210482339.4, filed with the China National Intellectual Property Administration on May 5, 2022 and entitled "COMMUNICATION METHOD AND APPARATUS", which is incorporated herein by reference in its entirety.

### TECHNICAL FIELD

Embodiments of this application relate to the communication field, and more specifically, to a method and an apparatus for determining an application server in a network switching scenario.

### BACKGROUND

With explosive growth of mobile service traffic, it is increasingly difficult to support this rapidly growing mobile service traffic model in a deployment manner of accessing a data network by using a centrally deployed anchor gateway. To resolve this problem, a concept of edge computing (edge computing, EC) is proposed in the industry. According to the EC, a user plane function (user plane function, UPF) network element and a service processing capability are distributed to a network edge to implement local processing of distributed service traffic, avoiding excessive centralization of the traffic and greatly reducing specification requirements on a core equipment room and a centralized gateway. In addition, a distance of a backhaul network is shortened, and latency and a jitter of a user packet are reduced, making ultra-low latency service deployment possible.

Specifically, a session management function (session management function, SMF) network element determines an extended mechanisms for DNS-client-subnet option (extended mechanisms for DNS-client-subnet option, ECS option) based on a location of user equipment (user equipment, UE) and deployment information of an edge computing service, and performs a domain name system query (domain name system query, DNS query) in this manner, so that an edge application server (edge application server, EAS) closest to the location of the UE can be found, thereby ensuring an optimal path for the UE to access the EAS, to improve user experience.

However, currently, how to find a closest application server after the UE performs public network switching in a roaming scenario is not considered.

**In** this case, how to find a closest application server after UE performs network switching in a roaming scenario is a problem to be urgently resolved in the industry.

### SUMMARY

Embodiments of this application provide a communication method and apparatus.

According to a first aspect, a communication method is provided, including: A first network device obtains first information, where the first information indicates at least one second network, the at least one second network is a network in which local traffic routing is allowed by a first network, the first network device is a device of the first network, the first network is a home network of a terminal device, and the one or more second networks are visited networks of the terminal device; and the first network device sends the first information to the terminal device.

In this application, the public network in which local traffic routing authorization is obtained is sent to the terminal device, so that the terminal device can find an application server having a better path, thereby reducing communication latency and improving communication quality.

With reference to the first aspect, in some implementations of the first aspect, that the first network device sends the first information to the terminal device includes: The first network device sends the first information to a second network device, where the second network device is a device of a public network currently connected to the terminal device; and the second network device sends the first information to the terminal device.

According to a second aspect, a communication method is provided, including: A terminal device obtains first information, where the first information indicates at least one second network, the second network is a network in which local traffic routing is allowed by a first network, and the first network is a home network of the terminal device; the terminal device switches from a third network currently connected to the terminal device to a fourth network, where the fourth network is a network that covers a current location of the terminal device; and the terminal device determines a first application server based on the first information, the third network, and the fourth network, where the first application server is an application server to which the terminal device has optimal access.

In this application, the application server is determined by determining whether the networks before and after the switching are networks in which local traffic routing authorization is obtained, so that the terminal device can find the application server having a better path, thereby reducing communication latency and improving communication quality.

With reference to the second aspect, in some implementations of the second aspect, that the terminal device determines an address of the first application server based on the first information, the third network, and the fourth network includes: With the third network being the first network, and the fourth network being a visited network of the terminal device, if the second network includes the fourth network, the terminal device initiates an edge application server rediscovery process, to determine the address of the first application server; or if the second network does not include the fourth network, the terminal device skips initiating an edge application server rediscovery process, where the address of the first application server is an address of an application server corresponding to the first network.

With reference to the second aspect, in some implementations of the second aspect, that the terminal device determines an address of the first application server based on the first information, the third network, and the fourth network includes: With the third network being a visited network of the terminal device, and the fourth network being a visited network of the terminal device, if the second network includes at least one of the third network and the fourth network, the terminal device initiates an edge application server rediscovery process, where the first application server is an edge application server determined through the edge application server rediscovery; or if the second network neither includes the third network nor includes the fourth network, the terminal device skips initiating an edge application server rediscovery process, where the first application server is an application server corresponding to the first network.

With reference to the second aspect, in some implementations of the second aspect, that the terminal device determines an address of the first application server based on the first information, the third network, and the fourth network includes: With the third network being a visited network of the terminal device, and the fourth network being the first network, if the second network includes the third network, the terminal device initiates an edge application server rediscovery process, where the first application server is an edge application server determined through the edge application server rediscovery; or if the second network does not include the third network, the terminal device skips initiating an edge application server rediscovery process, where the first application server is an application server corresponding to the first network.

With reference to the second aspect, in some implementations of the second aspect, that the terminal device determines an address of the first application server based on the first information, the third network, and the fourth network includes: With the third network being the first network, and the fourth network being a visited network of the terminal device, the terminal device initiates an edge application server rediscovery process, where the first application server is an edge application server determined through the edge application server rediscovery.

With reference to the second aspect, in some implementations of the second aspect, that the terminal device determines an address of the first application server based on the first information, the third network, and the fourth network includes: With the third network being a visited network of the terminal device, and the fourth network being the first network, the terminal device initiates an edge application server rediscovery process, where the first application server is an edge application server determined through the edge application server rediscovery.

According to a third aspect, a communication method is provided, including: A network device obtains first information, where the first information indicates at least one second network, the second network is a network in which local traffic routing is allowed by a first network, and the network device is a device of the first network; the network device determines that a network connected to the terminal device is switched from a third network to a fourth network, where the terminal device is a device that subscribes to the first network; the network device generates second information based on the first information, the third network, and the fourth network, where the second information is used for the terminal device to determine a first application server, and the first application server is an application server to which the terminal device has optimal access; and the network device sends the second information to the terminal device.

In this application, the application server is determined by determining whether the networks before and after the switching are public networks in which local traffic routing authorization is obtained, so that the terminal device can find the application server having a better path, thereby reducing communication latency and improving communication quality.

With reference to the third aspect, in some implementations of the third aspect, that the network device generates second information based on the first information, the third network, and the fourth network includes: With the third network being the first network, and the fourth network being a visited network of the terminal device, if the second network includes the fourth network, the second information indicates the terminal device to initiate an edge application server rediscovery process, where the first application server is an edge application server determined during the edge application server rediscovery process; or if the second network does not include the fourth network, the second information indicates that the first application server is an application server corresponding to the first network.

With reference to the third aspect, in some implementations of the third aspect, that the network device generates second information based on the first information, the third network, and the fourth network includes: With the third network being a visited network of the terminal device, and the fourth network being a visited network of the terminal device, if the second network includes at least one of the third network and the fourth network, the second information indicates the terminal device to initiate an edge application server rediscovery process, where the first application server is an edge application server determined during the edge application server rediscovery process; or if the second network neither includes the third network nor includes the fourth network, the second information indicates that the first application server is an application server corresponding to the first network.

With reference to the third aspect, in some implementations of the third aspect, that the network device generates second information based on the first information, the third network, and the fourth network includes: With the third network being a visited network of the terminal device, and the fourth network being the first network, if the second network includes the third network, the second information indicates the terminal device to initiate an edge application server rediscovery process, where the first application server is an edge application server determined during the edge application server rediscovery process; or if the second network does not include the third network, the second information indicates that the first application server is an application server corresponding to the first network.

With reference to the third aspect, in some implementations of the third aspect, that the network device generates second information based on the first information, the third network, and the fourth network includes: With the third network being the first network, and the fourth network being a visited network of the terminal device, the second information indicates the terminal device to initiate an edge application server rediscovery process, where the first application server is an edge application server determined during the edge application server rediscovery process.

With reference to the third aspect, in some implementations of the third aspect, that the network device generates second information based on the first information, the third network, and the fourth network includes: With the third network being a visited network of the terminal device, and the fourth network being the first network, the second information indicates the terminal device to initiate an edge application server rediscovery process, where the first application server is an edge application server determined during the edge application server rediscovery process.

According to a fourth aspect, a communication method is provided, including: A terminal device receives second information; and the terminal device determines an address of a first application server based on the second information, where the first application server is an application server to which the terminal device has optimal access.

According to a fifth aspect, a communication apparatus is provided, including: a transceiver module, configured to receive first information and send the first information to a terminal device, where the first information indicates one or more second networks, and the one or more second networks are networks in which local traffic routing is allowed by a first network.

According to a sixth aspect, a communication apparatus is provided, including: a transceiver module, configured to receive first information, where the first information indicates one or more second networks, and the one or more second networks are networks in which local traffic routing is allowed by a first network; and a processing module, configured to switch from a third network currently connected to the communication apparatus to a fourth network, where the fourth network is a network that covers a current location of the communication apparatus, where the processing module is further configured to determine a first application server based on the first information, the third network, and the fourth network, where the first application server is an application server to which the communication apparatus has optimal access.

With reference to the sixth aspect, in some implementations of the sixth aspect, determining an address of the first application server based on the first information, the third network, and the fourth network includes: With the third network being the first network, and the fourth network being a visited network of the terminal device, if the second network includes the fourth network, the terminal device initiates an edge application server rediscovery process, to determine the address of the first application server; or if the second network does not include the fourth network, the terminal device skips initiating an edge application server rediscovery process, where the address of the first application server is an address of an application server corresponding to the first network.

With reference to the sixth aspect, in some implementations of the sixth aspect, determining an address of the first application server based on the first information, the third network, and the fourth network includes: With the third network being a visited network of the terminal device, and the fourth network being a visited network of the terminal device, if the second network includes at least one of the third network and the fourth network, the terminal device initiates an edge application server rediscovery process, where the first application server is an edge application server determined through the edge application server rediscovery; or if the second network neither includes the third network nor includes the fourth network, the terminal device skips initiating an edge application server rediscovery process, where the first application server is an application server corresponding to the first network.

With reference to the sixth aspect, in some implementations of the sixth aspect, determining an address of the first application server based on the first information, the third network, and the fourth network includes: With the third network being a visited network of the terminal device, and the fourth network being the first network, if the second network includes the third network, the terminal device initiates an edge application server rediscovery process, where the first application server is an edge application server determined through the edge application server rediscovery; or if the second network does not include the third network, the terminal device skips initiating an edge application server rediscovery process, where the first application server is an application server corresponding to the first network.

With reference to the sixth aspect, in some implementations of the sixth aspect, determining an address of the first application server based on the first information, the third network, and the fourth network includes: With the third network being the first network, and the fourth network being a visited network of the terminal device, the terminal device initiates an edge application server rediscovery process, where the first application server is an edge application server determined through the edge application server rediscovery.

With reference to the sixth aspect, in some implementations of the sixth aspect, determining an address of the first application server based on the first information, the third network, and the fourth network includes: With the third network being a visited network of the terminal device, and the fourth network being the first network, the terminal device initiates an edge application server rediscovery process, where the first application server is an edge application server determined through the edge application server rediscovery.

According to a seventh aspect, a communication apparatus is provided, including: a transceiver module, configured to receive first information, where the first information indicates at least one second network, the second network is a network in which local traffic routing is allowed by a first network, and the communication apparatus is a device of the first network; and a processing module, configured to switch from a third network to a fourth network, and generate second information based on the first information, the third network, and the fourth network, where the second information is used for the terminal device to determine a first application server, the first application server is an application server to which the terminal device has optimal access, and the terminal device is a device that subscribes to the first network, where the transceiver module is further configured to send the second information.

With reference to the seventh aspect, in some implementations of the seventh aspect, the generating second information based on the first information, the third network, and the fourth network includes: With the third network being the first network, and the fourth network being a visited network of the terminal device, if the second network includes the fourth network, the second information indicates the terminal device to initiate an edge application server rediscovery process, where the first application server is an edge application server determined during the edge application server rediscovery process; or if the second network does not include the fourth network, the second information indicates that the first application server is an application server corresponding to the first network.

With reference to the seventh aspect, in some implementations of the seventh aspect, the generating second information based on the first information, the third network, and the fourth network includes: With the third network being a visited network of the terminal device, and the fourth network being a visited network of the terminal device, if the second network includes at least one of the third network and the fourth network, the second information indicates the terminal device to initiate an edge application server rediscovery process, where the first application server is an edge application server determined during the edge application server rediscovery process; or if the second network neither includes the third network nor includes the fourth network, the second information indicates that the first application server is an application server corresponding to the first network.

With reference to the seventh aspect, in some implementations of the seventh aspect, the generating second information based on the first information, the third network, and the fourth network includes: With the third network being a visited network of the terminal device, and the fourth network being a home network of the terminal device, if the second network includes the third network, the second information indicates the terminal device to initiate an edge application server rediscovery process, where the first application server is an edge application server determined during the edge application server rediscovery process; or if the second network does not include the third network, the second information indicates that the first application server is an application server corresponding to the first network.

With reference to the seventh aspect, in some implementations of the seventh aspect, the generating second information based on the first information, the third network, and the fourth network includes: With the third network being a home network of the terminal device, and the fourth network being a visited network of the terminal device, the second information indicates the terminal device to initiate an edge application server rediscovery process, where the first application server is an edge application server determined during the edge application server rediscovery process.

With reference to the seventh aspect, in some implementations of the seventh aspect, the generating second information based on the first information, the third network, and the fourth network includes: With the third network being a visited network of the terminal device, and the fourth network being a home network of the terminal device, the second information indicates the terminal device to initiate an edge application server rediscovery process, where the first application server is an edge application server determined during the edge application server rediscovery process.

According to an eighth aspect, a communication apparatus is provided, including: a transceiver module, configured to receive second information; and a processing module, configured to determine a first application server based on the second information, where the first application server is an application server to which the communication apparatus has optimal access.

According to a ninth aspect, a communication apparatus is provided, including a processor and a memory, where the memory is configured to store a computer program, and the processor is configured to invoke the computer program from the memory and run the computer program, to enable the communication device to perform the communication method in the first aspect, the second aspect, the third aspect, or the fourth aspect and the possible implementations of the first aspect, the second aspect, the third aspect, or the fourth aspect.

Optionally, there are one or more processors, and there are one or more memories.

Optionally, the memory may be integrated with the processor, or the memory and the processor are separately disposed.

Optionally, the communication device further includes a transmitter (transmitter) and a receiver (receiver).

According to a tenth aspect, a computer program product is provided. The computer program product includes a computer program (also referred to as code or instructions). When the computer program is run, a computer is enabled to perform the method according to any one of the possible implementations of the first aspect, the second aspect, the third aspect, or the fourth aspect.

According to an eleventh aspect, a computer-readable medium is provided. The computer-readable medium stores a computer program (also referred to as code or instructions), and when the computer program is run on a computer, the computer is enabled to perform the method according to any one of the possible implementations of the first aspect, the second aspect, the third aspect, or the fourth aspect.

According to a twelfth aspect, a chip system is provided, including a memory and a processor. The memory is configured to store a computer program, and the processor is configured to invoke the computer program from the memory and run the computer program, to enable a communication device in which the chip system is installed to perform the method according to any one of the possible implementations of the first aspect, the second aspect, the third aspect, or the fourth aspect.

The chip system may include an input circuit or interface configured to send information or data, and an output circuit or interface configured to receive information or data.

### BRIEF DESCRIPTION OF DRAWINGS

FIG. 1 is a diagram of a system architecture to which an embodiment of this application is applied;
FIG. 2 is a schematic flowchart of edge application server rediscovery according to an embodiment of this application;
FIG. 3 is a flowchart of a method according to an embodiment of this application;
FIG. 4 is a flowchart of another method according to an embodiment of this application;
FIG. 5 is a block diagram of an example of a communication apparatus according to an embodiment of this application;
FIG. 6 is a block diagram of another example of a communication apparatus according to an embodiment of this application; and
FIG. 7 is a diagram of a structure of an example of a terminal device according to an embodiment of this application.

### DESCRIPTION OF EMBODIMENTS

The following describes technical solutions of embodiments of this application with reference to accompanying drawings.

The technical solutions of embodiments of this application may be applied to various communication systems, such as a Global System for Mobile Communications (Global System for Mobile Communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, and a new radio (new radio, NR) system.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). This is not limited in embodiments of this application.

A network device in embodiments of this application may be a device configured to communicate with the terminal device. The network device may be a base transceiver station (base transceiver station, BTS) in the Global System for Mobile Communications (Global System for Mobile Communications, GSM) or code division multiple access (code division multiple access, CDMA), may be a NodeB (NodeB, NB) in a wideband code division multiple access (wideband code division multiple access, WCDMA) system, may be an evolved NodeB (evolutional NodeB, eNB or eNodeB) in the LTE system, or may be a radio controller in a scenario of a cloud radio access network (cloud radio access network, CRAN). Alternatively, the network device may be a relay station, an access point, a vehicle-mounted device, a wearable device, a network device in the 5G network, a network device in the evolved PLMN, or the like. This is not limited in embodiments of this application.

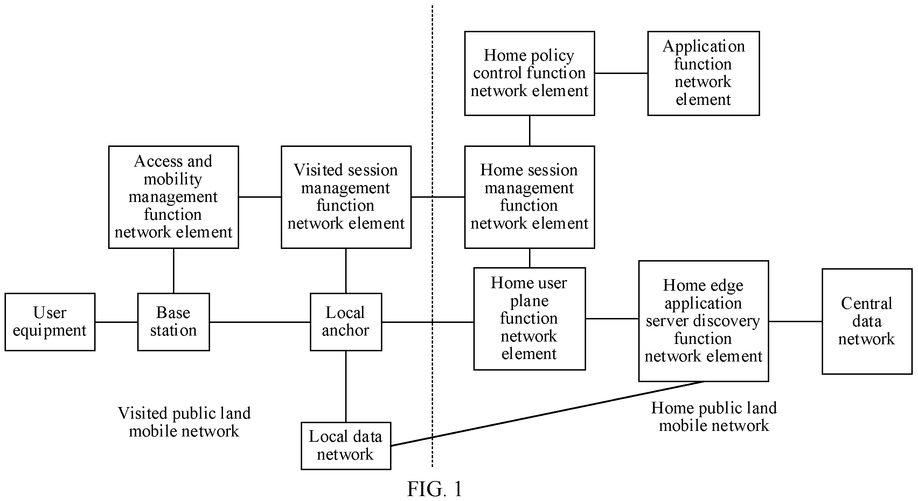

FIG. 1 is a diagram of a system architecture to which an embodiment of this application is applied. The system architecture to which this embodiment of this application is applied is an enhancement that is based on a conventional HR roaming architecture.

In a country or a region, a cellular mobile communication network of a standard of an operator is referred to as a public land mobile network (public land mobile network, PLMN). A PLMN to which user equipment (user equipment, UE) subscribes is referred to as a home PLMN (home PLMN, HPLMN), and is used to represent a home operator of a subscriber. When UE leaves coverage of the HPLMN due to movement or another reason, if a PLMN meets the following conditions: (1) The PLMN can cover a current location of the UE; and (2) an operator of the PLMN signs a roaming agreement with an operator of the HPLMN of the UE (which is a business agreement between operators, and has content that may include but not limited to a service, a charging manner, and the like provided for a subscriber of a network of a peer operator), the UE may access the PLMN, and the PLMN is referred to as a visited PLMN (Visited PLMN, VPLMN). That the UE accesses the VPLMN is referred to as roaming. The roaming may be classified into two types based on a termination manner of a user plane of the UE. Roaming in which the user plane of the UE is terminated at the VPLMN is referred to as local breakout (local breakout, LBO) roaming, and roaming in which the user plane of the UE is terminated at the HPLMN is referred to as home routed (home routed, HR) roaming.

In the system architecture in this embodiment of this application, a domain name system (domain name system, DNS) message is terminated at an edge application server discovery (edge application server discovery function, EASDF) network element of the HPLMN.

The following describes main network elements in the diagram of the system architecture in this embodiment of this application.

User equipment (user equipment, UE) is a network terminal device, for example, a mobile phone or an internet of things terminal device.

An access and mobility management function (access and mobility management function, AMF) network element is mainly responsible for mobility management in a mobile network, for example, user location update, registration of a user with a network, and user switching.

A session management function (session management function, SMF) network element is mainly responsible for session management in the mobile network, for example, session establishment, modification, and release. Specific functions of the session management function network element include, for example, allocating an IP address to a user or selecting a UPF that provides a packet forwarding function.

A user plane function (user plane function, UPF) network element is mainly responsible for processing a user packet, for example, forwarding and charging statistics.

A PDU session anchor (PDU Session Anchor, PSA) is directly connected to a data network and is mainly responsible for processing a user packet, for example, forwarding and charging statistics.

A policy control function (policy control function, PCF) network element supports a unified policy management network behavior; provides a policy rule for a control plane function for execution; and obtains subscription-related information from a unified data repository (unified data repository, UDR) network element for policy decision.

An application function (application function, AF) interacts with a 5G core network to provide a service, for example, supports the following functions: affecting service routing, exposing a network access capability, and interacting with a policy decision network element for policy control.

An edge application server discovery function (edge application server discovery function, EASDF) network element is configured to assist in discovering a domain name system query (domain name system query, DNS query) initiated by UE, to discover an edge application server (edge application server, EAS) IP closest to the UE. A main function is processing a DNS message based on an indication of the SMF, including reporting the DNS message to the SMF, adding an extended mechanisms for DNS-client-subnet option (extended mechanisms for DNS-client-subnet option, ECS option) to the DNS query, forwarding the DNS query to a DNS server, forwarding a DNS response to the UE, and the like.

When the UE accesses the VPLMN, some services (due to a subscribed DNN or S-NSSAI) support only HR roaming access. If it is expected to use edge computing (edge computing, EC) to access these applications, local traffic routing needs to be performed in the VPLMN, to be specific, a breakout point needs to be inserted in the VPLMN.

Local traffic routing means that the HPLMN allows the VPLMN to set a breakout point, and the UE establishes a protocol data unit (protocol data unit) session through the breakout point. The breakout point is referred to as a PDU session anchor (PDU session anchor, PSA). When the UE initiates an application request, the UE may access a local data network through the breakout point, to use a corresponding application. Based on local traffic routing, it can be avoided that the UE accesses a remote central data network in a roaming state, and a local data network having a better path is selected to reduce communication latency and improve communication quality.

There are two manners of inserting a breakout point in local traffic routing: static insertion and dynamic insertion.

The static insertion means that the SMF network element of the VPLMN inserts a breakout point based on authorization information and a location of the UE, and provides an ECS option corresponding to the location of the UE for the SMF of the HPLMN, to send the ECS option to the EASDF network element of the PLMN. In this manner, the ECS option is related only to the location of the UE. In other words, the ECS option may be determined based only on the location of the UE.

The dynamic insertion means that the UE initiates a DNS query and sends the DNS query to the EASDF of the HPLMN; the EASDF obtains a full qualified domain name (full qualified domain name, FQDN) from the DNS query and reports the full qualified domain name; the SMF of the HPLMN sends the FQDN to the SMF of the VPLMN; and the SMF of the VPLMN determines, based on the UE location and EAS deployment information (EAS deployment information, EDI), a target data network access identifier (data network access identifier, DNAI) and an ECS option corresponding to the target DNAI, and returns the ECS option to the SMF of the HPLMN, where the EDI includes the DNAI, an edge computing service identifier (for example, the FQDN(s), or an EAS IP(s)), and other information. The SMF of the HPLMN sends the ECS option to the EASDF of the HPLMN. In this manner, the ECS option is related to both ULI and service information (that is, the FQDN).

It should be noted that, when the breakout point is statically inserted, the HPLMN may be aware of a VPLMN service deployment status or may not be aware of a VPLMN service deployment status; or when the breakout point is dynamically inserted, the HPLMN needs to be aware of a VPLMN service deployment status.

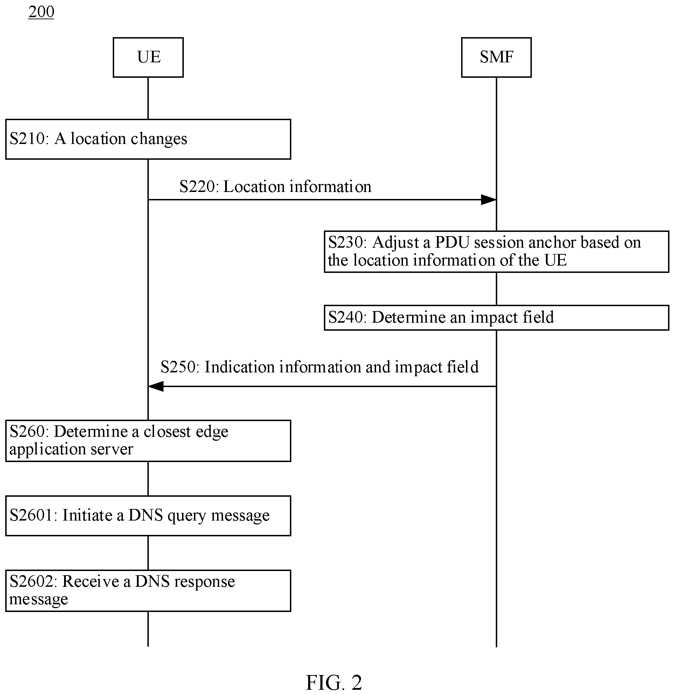

FIG. 2 is a schematic flowchart of edge application server rediscovery according to an embodiment of this application.

When UE moves, the UE moves across edge computing (edge computing, EC). For example, the UE originally accesses an EAS service a at an EC deployment location 1, and the UE moves from the EC deployment location 1 to an EC deployment location 2. It is assumed that the EAS service a is also deployed at the EC deployment location 2. In this case, for the UE, a path corresponding to access to the EAS service a at the EC deployment location 2 is better.

As shown in FIG. 2, a method 200 for edge application server rediscovery (edge application server rediscovery, EAS rediscovery) is as follows.

S210: A location of the UE changes. For example, the user equipment moves from the EC deployment location 1 to the EC deployment location 2.

Optionally, S220 to S250 may be further performed.

S220: The UE sends current location information to an SMF.

S230: The SMF adjusts a PDU session anchor (PDU session anchor, PSA) based on the location information of the UE.

Specifically, the SMF adjusts the PSA in three manners: inserting the PSA, changing the PSA, and deleting the PSA. The SMF selects, based on the location of the UE, one of the three manners for adjusting.

S240: The SMF determines an impact field (impact field). The SMF determines the impact field based on a correspondence between a full qualified domain name FQDN(s)/an EAS IP(s) and a data network access identifier (data network access identifier, DNAI). The impact field is related to the following two: a local data network to be inserted/changed/deleted, and an identifier of an old EAS(s) (that is, the FQDN(s) or the EAS IP(s)). Because the UE needs to access the local data network through the PSA, a local data network to be inserted/changed/deleted corresponds to a PSA to be inserted/changed/deleted.

For example, a local data network is inserted. Assuming that EC service deployment information corresponding to the local data network includes FQDNs 1-10, the impact field=the FQDNs 1-10.

For example, a local data network is changed, and the UE moves from the EC deployment location 1 to the EC deployment location 2. FQDNs 1-5 are deployed at the EC deployment location 1, and FQDNs 1-10 are deployed at the EC deployment location 2. The impact field=the FQDNs 1-10.

For example, a local data network is deleted, and the UE moves from the EC deployment location 1 to a central data network. FQDNs 1-5 are deployed at the EC deployment location 1. The impact field=the FQDNs 1-5.

S250: The SMF sends indication information and the impact field to the UE. The indication information indicates the UE to perform edge application server rediscovery.

S260: The UE determines a closest edge application server. Specific steps are as follows.

S2601: The UE initiates a DNS query message, where the DNS query message includes a service identifier of a service to be queried for. The UE sends the DNS query message to a DNS server.

The service identifier may be represented by a domain name. The DNS server may be an EASDF or a local DNS server.

The DNS server receives the DNS query message, determines, by parsing the DNS query message, an address of an edge application server that is close to the UE, and sends a DNS response message to the UE.

S2602: The UE receives the DNS response message, where the DNS response message includes the address of the edge application server.

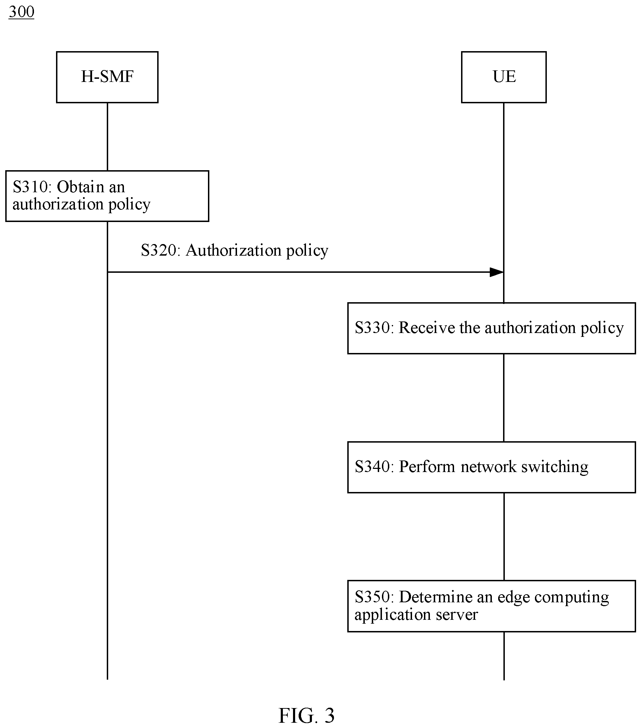

FIG. 3 is a flowchart of a method according to an embodiment of this application. As shown in FIG. 3, a method 300 includes the following steps.

S310: An H-SMF obtains an authorization policy. The authorization policy includes a list of VPLMNs in which local traffic routing is allowed, and the H-SMF is an SMF of an HPLMN.

In this embodiment of this application, the authorization policy may be used for determining a list of VPLMNs in which local traffic routing is allowed for all services, or may be used for determining a list of VPLMNs in which local traffic routing is allowed for some specific services. Specifically, whether the authorization policy is for all services or a specific service, and a quantity of specific services and a name of the specific service depend on an agreement between operators. This is not limited in this application.

A manner in which the H-SMF obtains the authorization policy is not limited in embodiments of this application.

In a possible implementation, the authorization policy is preconfigured in the H-SMF.

In another possible implementation, the H-SMF receives the authorization policy sent by another network device. For example, the H-SMF obtains the authorization policy from an H-PCF or a UDM.

S320: The H-SMF sends the authorization policy to a terminal device.

It should be noted that, if a public network connected to the UE is a PLMN in this case, the H-SMF transparently transmits the authorization policy to the UE by using a V-SMF. The V-SMF is an SMF of the VPLMN.

It may be understood that the H-SMF converts the authorization policy to be sent to the UE into first information and sends the first information to the UE. For example, the first information is the list of VPLMNs in which local traffic routing is allowed. For another example, the first information is the VPLMN in which local traffic routing is allowed and a corresponding specific service.

S330: The terminal device receives the authorization policy.

It may be understood that the terminal device stores the authorization policy.

S340: The UE performs network switching.

Specifically, that the UE performs network switching includes the following cases.

Case 1: A network currently connected to the UE is an HPLMN, and after the network switching, a network connected to the UE is a VPLMN.

Case 2: A network currently connected to the UE is a VPLMN #1, and after the network switching, a network connected to the UE is a VPLMN #2.

Case 3: A network currently connected to the UE is a VPLMN, and after the network switching, a network connected to the UE is an HPLMN.

It should be understood that, when performing network switching, the UE obtains an identifier of a public network after the switching.

S350: The UE determines an edge computing application server.

In a possible implementation, the UE determines the edge computing application server based on the list of VPLMNs in which local traffic routing is allowed and a network the UE switches to.

Specifically, the three cases in S340 are separately described as follows.

Case 1: The UE moves from an HPLMN to a VPLMN.

If the list of VPLMNs in which local traffic routing is allowed includes a network the UE switches to, the terminal device initiates EAS rediscovery, to determine an edge application server closest to the UE.

If the list of VPLMNs in which local traffic routing is allowed does not include the network the UE switches to, the terminal device skips initiating EAS rediscovery, and the terminal device continues to use an application server before the movement. The application server before the movement refers to an application server corresponding to an HPLMN network to which the UE subscribes.

Case 2: The UE moves from a VPLMN 1 to a VPLMN 2.

If the list of VPLMNs in which local traffic routing is allowed includes a network the UE switches to, the terminal device initiates an edge application server rediscovery process, where a first application server is an edge application server determined through the edge application server rediscovery. The first application server corresponds to the VPLMN 2.

If the list of VPLMNs in which local traffic routing is allowed does not include the network the UE switches to, and the list of VPLMNs includes the VPLMN 1, the terminal device initiates an edge application server rediscovery process, where a first application server is an edge application server determined through the edge application server rediscovery. The first application server corresponds to the HPLMN.

If the list of VPLMNs in which local traffic routing is allowed does not include the network the UE switches to, and the list of VPLMNs does not include the VPLMN 1, the terminal device skips initiating an edge application server rediscovery process, where a first application server is an application server corresponding to a first public network.

It may be understood that the foregoing case may be summarized as follows: If the list of VPLMNs includes the VPLMN 1 or the VPLMN 2, the UE initiates EAS rediscovery.

Case 3: The UE moves from a VPLMN 1 to an HPLMN

If the list of VPLMNs in which local traffic routing is allowed includes the VPLMN 1, the terminal device initiates an edge application server rediscovery (EAS rediscovery) process, where a first application server is an edge application server determined through the edge application server rediscovery (EAS rediscovery). The first application server corresponds to the HPLMN.

If the list of VPLMNs in which local traffic routing is allowed does not include the VPLMN 1, the terminal device skips initiating an edge application server rediscovery process, where a first application server is an application server corresponding to a first public network.

In another implementation of case 3, regardless of whether the list of VPLMNs includes the VPLMN 1, the terminal device initiates an edge application server rediscovery process when determining that the UE moves from the VPLMN to the HPLMN, where a first application server is an application server corresponding to a first public network. The first application server corresponds to the HPLMN.

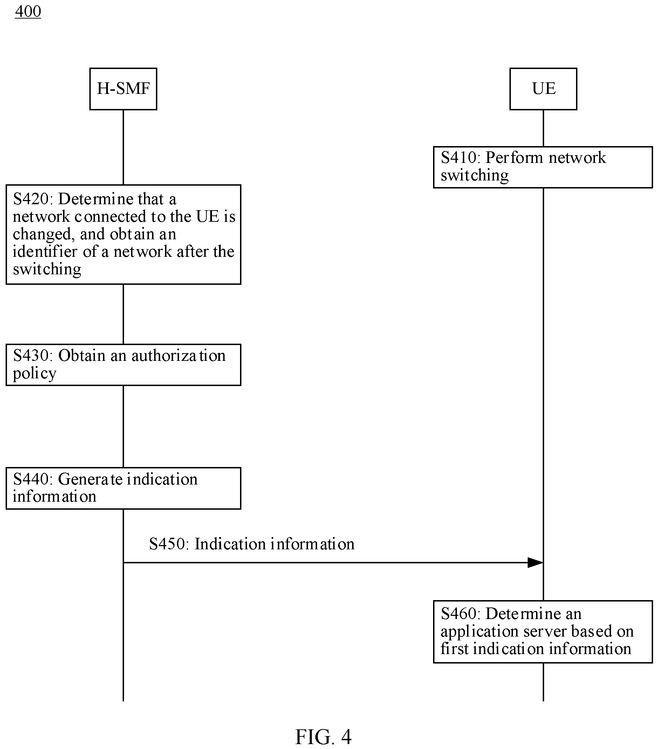

FIG. 4 is a flowchart of a method according to an embodiment of this application. As shown in FIG. 4, a method 400 includes the following steps.

S410: UE performs network switching. Specifically, that UE performs network switching includes the following cases.

Case 1: A network currently connected to the UE is an HPLMN, and after the network switching, a network connected to the UE is a VPLMN.

Case 2: A network currently connected to the UE is a VPLMN #1, and after the network switching, a network connected to the UE is a VPLMN #2.

Case 3: A network currently connected to the UE is a VPLMN, and after the network switching, a network connected to the UE is an HPLMN.

S420: An H-SMF determines that the UE performs network switching, and obtains an identifier corresponding to a network after the network switching, where the H-SMF is an SMF of an HPLMN.

The H-SMF may obtain, in a plurality of manners, the identifier corresponding to the network after the switching. For example, (1) the H-SMF determines, based on an identifier of a network element that interacts with the H-SMF, for example, an AMF ID or a V-SMF ID, the identifier corresponding to the network. (2) The H-SMF determines, based on location information, the identifier corresponding to the network.

S430: The H-SMF obtains an authorization policy. The authorization policy is used for determining a list of VPLMNs in which local traffic routing is allowed.

It may be understood that S430 may be performed before step S410. An execution sequence of S430 and S410 is not limited in this application.

In this embodiment of this application, the authorization policy may be used for determining a VPLMN in which local traffic routing is allowed for all services, or may be used for determining a VPLMN in which local traffic routing is allowed for some specific services. Specifically, whether the authorization policy is for all services or a specific service, and a quantity of specific services and a name of the specific service depend on an agreement between operators. This is not limited in this application.

A manner in which the H-SMF obtains the authorization policy is not limited in embodiments of this application.

In a possible implementation, the authorization policy is preconfigured in the H-SMF.

In another possible implementation, the H-SMF receives the authorization policy sent by another network device. For example, the H-SMF obtains the authorization policy from an H-PCF or a UDM.

It should be understood that an execution sequence of steps S410 and S420 is not limited in this embodiment of this application.

S440: The H-SMF generates indication information, where the indication information indicates a terminal device to determine an application server.

In a possible implementation, the H-SMF generates the indication information based on the list of VPLMNs in which local traffic routing is allowed and networks the UE switches from and to.

Specifically, different cases in S430 are described as follows.

Case 1: The UE moves from the HPLMN to a VPLMN 1.

If the list of VPLMNs in which local traffic routing is allowed includes the VPLMN 1, the indication information indicates the terminal device to initiate EAS rediscovery, to determine a closest edge application server.

If the list of VPLMNs in which local traffic routing is allowed does not include the VPLMN 1, the indication information indicates the terminal device to use a home application server, that is, an application server before the movement, where the home application server is an application server corresponding to an HPLMN network to which the UE subscribes.

Case 2: The UE moves from a VPLMN 1 to a VPLMN 2.

If the list of VPLMNs in which local traffic routing is allowed includes the VPLMN 2, the indication information indicates the terminal device to initiate an edge application server rediscovery process, where a first application server is an edge application server determined during the edge application server rediscovery process. The first application server corresponds to the VPLMN 2.

If the list of VPLMNs in which local traffic routing is allowed does not include the VPLMN 2, and the list of VPLMNs includes the VPLMN 1, the indication information indicates the terminal device to initiate an edge application server rediscovery process, where a first application server is an edge application server determined during the edge application server rediscovery process. The first application server corresponds to the HPLMN.

If the list of VPLMNs in which local traffic routing is allowed does not include the VPLMN 2, and the list of VPLMNs does not include the VPLMN 1, the indication information indicates the UE to use a home application server, that is, an application server before the movement, where the home application server is an application server corresponding to an HPLMN network to which the UE subscribes. It may be understood that, indicating the UE to use the home application server may also be understood as that the H-SMF does not send the indication information to the UE, that is, the UE does not need to initiate the EAS rediscovery.

It should be noted that the foregoing case may be summarized as follows: When the list of VPLMNs includes the VPLMN 1 or the VPLMN 2, the H-SMF sends the indication information to the UE, to indicate the terminal device to initiate the edge application server rediscovery process.

Case 3: The UE moves from a VPLMN 1 to the HPLMN

If the list of VPLMNs in which local traffic routing is allowed includes the VPLMN 1, the indication information indicates the terminal device to initiate an edge application server rediscovery process, where a first application server is an edge application server determined during the edge application server rediscovery process. The first application server corresponds to the HPLMN.

If the list of VPLMNs in which local traffic routing is allowed does not include the VPLMN 1, the indication information indicates the UE to use a home application server, that is, an application server before the movement, where the home application server is an application server corresponding to an HPLMN network to which the UE subscribes. It may be understood that, indicating the UE to use the home application server may also be understood as that the H-SMF does not send the indication information to the UE, that is, the UE does not need to initiate the EAS rediscovery.

In another implementation of case 3, regardless of whether the list of VPLMNs includes the VPLMN 1, when the H-SMF determines that the UE enters the HPLMN, the indication information indicates the UE to initiate an edge application server rediscovery process. A first application server is an edge application server determined during the edge application server rediscovery process. The first application server corresponds to the HPLMN.

In another possible implementation, the H-SMF generates the indication information based on the list of VPLMNs in which local traffic routing is allowed, networks the UE switches from and to, and subscription information of the UE.

Specifically, if the subscription information of the UE includes information indicating that access of the UE to the EAS is supported, the indication information is the same as that of the foregoing implementation, and details are not described herein. If the subscription information of the UE does not include information indicating that access of the UE to the EAS is supported, the indication information indicates the terminal device to use the home application server.

S450: The H-SMF sends the indication information to the UE.

It should be noted that if a public network the UE switches to is the VPLMN, the H-SMF transparently transmits the indication information to the UE through a V-SMF. The V-SMF is an SMF of the VPLMN.

In a possible implementation, the indication information may be implicit. Specifically, the H-SMF may not send the indication information to the UE when determining that the UE does not need to perform the EAS rediscovery process. In other words, the UE does not need to initiate the EAS rediscovery, and the UE uses the home application server.

S460: The UE receives the indication information to determine the application server.

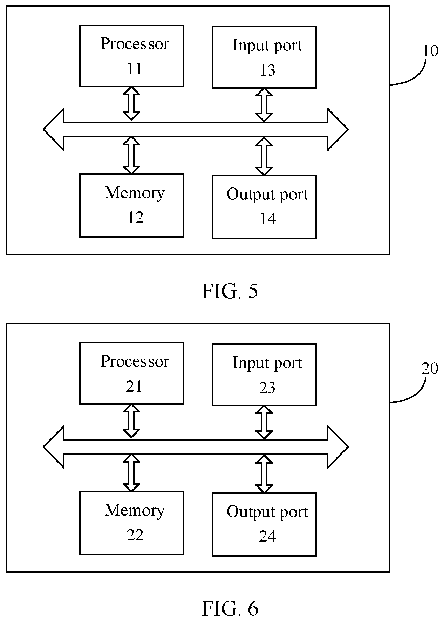

FIG. 5 is a diagram of a communication apparatus 10 according to an embodiment of this application. As shown in FIG. 5, the apparatus 10 may be a device that re-determines an application server after a connected network is changed, for example, the foregoing terminal device, or may be a chip or a circuit, for example, a chip or a circuit that may be disposed on the foregoing device that re-determines the application server after the connected network is changed.

The apparatus 10 may include a processor 11 (an example of a processing unit) and a memory 12. The memory 12 is configured to store instructions, and the processor 11 is configured to execute the instructions stored in the memory 12, so that the apparatus 10 implements the steps performed by the device that re-determines the application server after the connected network is changed in the method corresponding to FIG. 3 or FIG. 4.

Further, the apparatus 10 may further include an input port 13 (an example of a communication unit) and an output port 14 (another example of the communication unit). Further, the processor 11, the memory 12, the input port 13, and the output port 14 may communicate with each other by using an internal connection path, to transfer a control signal and/or a data signal. The memory 12 is configured to store a computer program. The processor 11 may be configured to invoke the computer program from the memory 12 and run the computer program, to control the input port 13 to receive a signal, and control the output port 14 to send a signal, to implement the steps performed by the terminal device in the foregoing method. The memory 12 may be integrated into the processor 11, or may be disposed separately from the processor 11.

Optionally, it is assumed that the communication apparatus 10 is a communication device, the input port 13 is a receiver, and the output port 14 is a transmitter. The receiver and the transmitter may be a same physical entity or different physical entities. When the receiver and the transmitter are a same physical entity, the receiver and the transmitter may be collectively referred to as a transceiver.

Optionally, it is assumed that the communication apparatus 10 is a chip or a circuit, the input port 13 is an input interface, and the output port 14 is an output interface.

In an implementation, it may be considered that functions of the input port 13 and the output port 14 are implemented by using a transceiver circuit or a dedicated transceiver chip. It may be considered that the processor 11 is implemented by using a dedicated processing chip, processing circuit, or processor, or a universal chip.

In another implementation, it may be considered that the communication device provided in this embodiment of this application is implemented by using a general-purpose computer. To be specific, program code for implementing functions of the processor 11, the input port 13, and the output port 14 are stored in the memory 12, and a general-purpose processor implements the functions of the processor 11, the input port 13, and the output port 14 by executing the code in the memory 12.

Modules or units in the communication apparatus 10 may be configured to perform actions or processing processes performed by the device (for example, a terminal device) that re-determines the application server after the connected network is changed in the foregoing method. To avoid repetition, detailed descriptions thereof are omitted herein.

For concepts, explanations, and detailed descriptions related to the apparatus 10 and the technical solutions provided in embodiments of this application, and other steps, refer to the descriptions of the content in the foregoing method or other embodiments. Details are not described herein again.

According to the foregoing method, FIG. 6 is a diagram of a communication apparatus 20 according to an embodiment of this application. As shown in FIG. 6, the apparatus 20 may be a device, which is a communication peer, that re-determines an application server after a connected network is changed, for example, the foregoing network device, or may be a chip or a circuit, for example, a chip or a circuit that may be disposed in the foregoing device, which is the communication peer, that re-determines the application server after the connected network is changed.

The apparatus 20 may include a processor 21 (an example of a processing unit) and a memory 22. The memory 22 is configured to store instructions, and the processor 21 is configured to execute the instructions stored in the memory 22, so that the apparatus 20 implements the steps performed by the device, which is the communication peer, that re-determines an application server after the connected network is changed in the method corresponding to FIG. 4 or FIG. 5.

Further, the apparatus 20 may further include an input port 23 (an example of a communication unit) and an output port 24 (another example of the communication unit). Further, the processor 21, the memory 22, the input port 23, and the output port 24 may communicate with each other by using an internal connection path, to transfer a control signal and/or a data signal. The memory 22 is configured to store a computer program. The processor 21 may be configured to invoke the computer program from the memory 22 and run the computer program, to control the input port 23 to receive a signal, and control the output port 24 to send a signal, to implement the steps performed by the terminal device in the foregoing method. The memory 22 may be integrated into the processor 21, or may be disposed separately from the processor 21.

Optionally, it is assumed that the communication apparatus 20 is a communication device, the input port 23 is a receiver, and the output port 24 is a transmitter. The receiver and the transmitter may be a same physical entity or different physical entities. When the receiver and the transmitter are a same physical entity, the receiver and the transmitter may be collectively referred to as a transceiver.

Optionally, it is assumed that the communication apparatus 20 is a chip or a circuit, the input port 23 is an input interface, and the output port 24 is an output interface.

In an implementation, it may be considered that functions of the input port 23 and the output port 24 are implemented by using a transceiver circuit or a dedicated transceiver chip. It may be considered that the processor 21 is implemented by using a dedicated processing chip, processing circuit, or processor, or a universal chip.

In another implementation, it may be considered that the communication device provided in this embodiment of this application is implemented by using a general-purpose computer. To be specific, program code for implementing functions of the processor 21, the input port 23, and the output port 24 are stored in the memory 22, and a general-purpose processor implements the functions of the processor 21, the input port 23, and the output port 24 by executing the code in the memory 22.

Modules or units in the communication apparatus 20 may be configured to perform actions or processing processes performed when routing information of the communication peer (that is, a second device) is changed in the foregoing method. To avoid repetition, detailed descriptions thereof are omitted herein.

For concepts, explanations, and detailed descriptions related to the apparatus 20 and the technical solutions provided in embodiments of this application and other steps, refer to the descriptions of the content in the foregoing method, or other embodiments. Details are not described herein again.

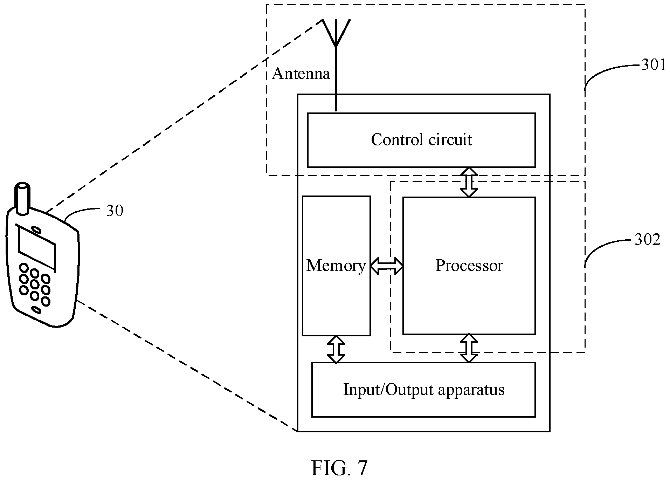

FIG. 7 is a diagram of a structure of a terminal device 30 according to this application. For ease of description, FIG. 7 shows only main components of the terminal device. As shown in FIG. 7, the terminal device 30 includes a processor, a memory, a control circuit, an antenna, and an input/output apparatus.

The processor is mainly configured to process a communication protocol and communication data, control an entire terminal device, execute a software program, and process data of the software program, for example, is configured to support the terminal device in performing the actions described in the foregoing embodiments of the indication method for transmitting a precoding matrix. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in the form of an electromagnetic wave. The input/output apparatus, such as a touchscreen, a display, or a keyboard, is mainly configured to: receive data input by a user and output data to the user.

After the terminal device is powered on, the processor may read the software program in a storage unit, interpret and execute instructions of the software program, and process data of the software program. When data needs to be sent wirelessly, the processor performs baseband processing on the data to be sent, and then outputs a baseband signal to a radio frequency circuit. The radio frequency circuit performs radio frequency processing on the baseband signal, and then sends a radio frequency signal outward through the antenna in the form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 7 shows only one memory and only one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 7 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in the form of a software program, and the processor executes the software program to implement a baseband processing function.

For example, in embodiments of this application, an antenna having receiving and sending functions and a control circuit may be considered as a transceiver unit 201 of the terminal device 20, and a processor having a processing function may be considered as a processing unit 302 of the terminal device 30. As shown in FIG. 7, the terminal device 30 includes a transceiver unit 301 and the processing unit 302. The transceiver unit may also be referred to as a transceiver, a transceiver machine, a transceiver apparatus, or the like. Optionally, a component that is in the transceiver unit 301 and that is configured to implement a receiving function may be considered as a receiving unit, and a component that is in the transceiver unit 301 and that is configured to implement a sending function may be considered as a sending unit. In other words, the transceiver unit 301 includes the receiving unit and the sending unit. For example, the receiving unit may also be referred to as a receiver, a receive machine, or a receiving circuit, and the sending unit may also be referred to as a transmitter, a transmit machine, or a transmitting circuit.

The terminal device shown in FIG. 7 may perform the actions performed by the terminal device in the foregoing method 300 or method 400. To avoid repetition, detailed descriptions thereof are omitted herein.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation exceeds the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, that is, may be located in one place or may be distributed over a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes a plurality of instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first network device, first information, wherein the first information indicates at least one second network, the at least one second network is a network in which local traffic routing is allowed by a first network, the first network device is a device of the first network, the first network is a home network of a terminal device, and the at least one second network is a visited network of the terminal device; and
sending, by the first network device, the first information to the terminal device.

2. The method according to claim 1, wherein the sending, by the first network device, the first information to the terminal device comprises:
sending, by the first network device, the first information to a second network device, wherein the second network device is a device of a network currently connected to the terminal device; and
sending, by the second network device, the first information to the terminal device.

3. A communication method, comprising:
obtaining, by a terminal device, first information, wherein the first information indicates at least one second network, the second network is a network in which local traffic routing is allowed by a first network, the first network is a home network of the terminal device, and the at least one second network is a visited network of the terminal device;
switching, by the terminal device, from a third network currently connected to the terminal device to a fourth network, wherein the fourth network is a network that covers a current location of the terminal device; and
determining, by the terminal device, a first application server based on the first information, the third network, and the fourth network, wherein the first application server is an application server to which the terminal device has optimal access.

4. The method according to claim 3, wherein determining, by the terminal device, an address of the first application server based on the first information, the third network, and the fourth network comprises:
with the third network being the first network, and the fourth network being a visited network of the terminal device,
if the second network comprises the fourth network, initiating, by the terminal device, an edge application server rediscovery process, to determine the address of the first application server; or
if the second network does not comprise the fourth network, skipping initiating, by the terminal device, an edge application server rediscovery process, wherein the address of the first application server is an address of an application server corresponding to the first network.

5. The method according to claim 3, wherein determining, by the terminal device, an address of the first application server based on the first information, the third network, and the fourth network comprises:
with the third network being a visited network of the terminal device, and the fourth network being a visited network of the terminal device,
if the second network comprises at least one of the third network and the fourth network, initiating, by the terminal device, an edge application server rediscovery process, wherein the first application server is an edge application server determined through the edge application server rediscovery; or
if the second network neither comprises the third network nor comprises the fourth network, skipping initiating, by the terminal device, an edge application server rediscovery process, wherein the first application server is an application server corresponding to the first network.

6. The method according to claim 3, wherein determining, by the terminal device, an address of the first application server based on the first information, the third network, and the fourth network comprises:
with the third network being a visited network of the terminal device, and the fourth network being the first network,
if the second network comprises the third network, initiating, by the terminal device, an edge application server rediscovery process, wherein the first application server is an edge application server determined through the edge application server rediscovery; or
if the second network does not comprise the third network, skipping initiating, by the terminal device, an edge application server rediscovery process, wherein the first application server is an application server corresponding to the first network.

7. The method according to claim 3, wherein determining, by the terminal device, an address of the first application server based on the first information, the third network, and the fourth network comprises:
with the third network being the first network, and the fourth network being a visited network of the terminal device, initiating, by the terminal device, an edge application server rediscovery process, wherein the first application server is an edge application server determined through the edge application server rediscovery.

8. The method according to claim 3, wherein determining, by the terminal device, an address of the first application server based on the first information, the third network, and the fourth network comprises:
with the third network being a visited network of the terminal device, and the fourth network being the first network, initiating, by the terminal device, an edge application server rediscovery process, wherein the first application server is an edge application server determined through the edge application server rediscovery.

9. A communication method, comprising:
obtaining, by a network device, first information, wherein the first information indicates at least one second network, the at least one second network is a network in which local traffic routing is allowed by a first network, the network device is a device of the first network, and the at least one second network is a visited network of the terminal device;
determining, by the network device, that a network connected to the terminal device is switched from a third network to a fourth network, wherein the terminal device is a device that subscribes to the first network;
generating, by the network device, second information based on the first information, the third network, and the fourth network, wherein the second information is used for the terminal device to determine a first application server, and the first application server is an application server to which the terminal device has optimal access; and
sending, by the network device, the second information to the terminal device.

10. The method according to claim 9, wherein the generating, by the network device, second information based on the first information, the third network, and the fourth network comprises:
with the third network being the first network, and the fourth network being a visited network of the terminal device,
if the second network comprises the fourth network, the second information indicates the terminal device to initiate an edge application server rediscovery process, wherein the first application server is an edge application server determined during the edge application server rediscovery process; or
if the second network does not comprise the fourth network, the second information indicates that the first application server is an application server corresponding to the first network.

11. The method according to claim 9, wherein the generating, by the network device, second information based on the first information, the third network, and the fourth network comprises:
with the third network being a visited network of the terminal device, and the fourth network being a visited network of the terminal device,
if the second network comprises at least one of the third network and the fourth network, the second information indicates the terminal device to initiate an edge application server rediscovery process, wherein the first application server is an edge application server determined during the edge application server rediscovery process; or
if the second network neither comprises the third network nor comprises the fourth network, the second information indicates that the first application server is an application server corresponding to the first network.

12. The method according to claim 9, wherein the generating, by the network device, second information based on the first information, the third network, and the fourth network comprises:
with the third network being a visited network of the terminal device, and the fourth network being the first network,
if the second network comprises the third network, the second information indicates the terminal device to initiate an edge application server rediscovery process, wherein the first application server is an edge application server determined during the edge application server rediscovery process; or
if the second network does not comprise the third network, the second information indicates that the first application server is an application server corresponding to the first network.

13. The method according to claim 9, wherein the generating, by the network device, second information based on the first information, the third network, and the fourth network comprises:
with the third network being the first network, and the fourth network being a visited network of the terminal device, the second information indicates the terminal device to initiate an edge application server rediscovery process, wherein the first application server is an edge application server determined during the edge application server rediscovery process.

14. The method according to claim 9, wherein the generating, by the network device, second information based on the first information, the third network, and the fourth network comprises:
with the third network being a visited network of the terminal device, and the fourth network being the first network, the second information indicates the terminal device to initiate an edge application server rediscovery process, wherein the first application server is an edge application server determined during the edge application server rediscovery process.

15. A communication method, comprising:
receiving, a terminal device, second information; and
determining, by the terminal device, an address of a first application server based on the second information, wherein the first application server is an application server to which the terminal device has optimal access.

16. A communication apparatus, comprising:
a transceiver module, configured to receive first information and send the first information to a terminal device, wherein the first information indicates one or more second networks, and the one or more second networks are networks in which local traffic routing is allowed by a first network.

17. A communication apparatus, comprising:
a transceiver module, configured to receive first information, wherein the first information indicates one or more second networks, and the one or more second networks are networks in which local traffic routing is allowed by a first network; and
a processing module, configured to switch from a third network currently connected to the communication apparatus to a fourth network, wherein the fourth network is a network that covers a current location of the communication apparatus, wherein
the processing module is further configured to determine an address of a first application server based on the first information, the third network, and the fourth network, wherein the first application server is an application server to which the communication apparatus has optimal access.

18. A communication apparatus, comprising:
a transceiver module, configured to receive first information, wherein the first information indicates at least one second network, the second network is a network in which local traffic routing is allowed by a first network, and the communication apparatus is a device of the first network; and
a processing module, configured to detect that a network connected to a terminal device is switched from a third network to a fourth network, and generate second information based on the first information, the third network, and the fourth network, wherein the second information is used for the terminal device to determine a first application server, the first application server is an application server to which the terminal device has optimal access, and the terminal device is a device that subscribes to the first network, wherein
the transceiver module is further configured to send the second information.

19. A communication apparatus, comprising:
a transceiver module, configured to receive second information; and
a processing module, configured to determine an address of a first application server based on the second information, wherein the first application server is an application server to which the communication apparatus has optimal access.

20. A communication apparatus, comprising:
a processor, configured to execute a computer program stored in a memory, to enable the communication apparatus to perform the communication method according to any one of claims 1 to 15.

21. A computer-readable storage medium, wherein the computer-readable storage medium stores a computer program, and when the computer program is run on a computer, the computer is enabled to perform the communication method according to any one of claims 1 to 15.

22. A chip system, comprising a processor, configured to invoke a computer program from a memory and run the computer program, to enable a communication device on which the chip system is installed to perform the communication method according to any one of claims 1 to 15.
